# EUROPÄISCHE PATENTSCHRIFT

(11) **EP 2 921 150 B1**
(45) Veröffentlichungstag und Bekanntmachung des Hinweises auf die Patenterteilung: **12.02.2020**
(21) Anmeldenummer: 14160524.6
(22) Anmeldetag: 18.03.2014
(51) Int. Cl.: A61H 3/04, F16B 7/10

(54) **Rastanordnung für eine Mobilitätshilfe**
Detent assembly for a mobility aid
Dispositif d'arrêt pour une aide à la mobilité

(43) Veröffentlichungstag der Anmeldung: 23.09.2015
(73) Patentinhaber: Rebotec Rehabilitationsmittel GmbH, 49610 Quakenbrück (DE)
(72) Erfinder: Feldotto, Udo, 33415 Verl (DE)
(74) Vertreter: Rausch Wanischeck-Bergmann Brinkmann

(56) Entgegenhaltungen:
- DE-A1- 2 819 717
- DE-U1-202011 000 980
- US-A- 4 586 399

## Beschreibung

Die Erfindung betrifft eine Rastanordnung für eine Mobilitätshilfe, insbesondere für einen höhenverstellbaren Holm einer Mobilitätshilfe, mit zwei relativ zueinander bewegbaren Teilen, wobei das erste Teil eine Rastbahn und das zweite Teil ein Rastmittel zur Ausbildung eines Kontakts mit der Rastbahn aufweist, und wobei eine Handhabe vorgesehen ist zur Arretierung des Rastmittels im Kontakt mit der Rastbahn.

Derartige Rastanordnungen für Mobilitätshilfen sind aus dem Stand der Technik wie aus dem Dokument US 4,586,399 schon bekannt.

Bei Mobilitätshilfen handelt es sich um Vorrichtungen, welche die Mobilität von motorisch eingeschränkten Personen, wie beispielsweise älteren Menschen oder Kleinkindern, verbessern. Es handelt sich hierbei beispielsweise um Rollatoren, Rollstühle, Kinderwagen und dergleichen. Eine Mobilitätshilfe ist zur verbesserten Handhabung oftmals auf die Körpermaße des Verwenders einstellbar. Bei einem Rollator sind beispielsweise zwei senkrechte Holme, an deren oberen Enden Handgriffe zur Verwendung des Rollators angeordnet sind, längenverstellbar.

Die bekannten Rastanordnungen für Mobilitätshilfen weisen zwei relativ zueinander bewegbare Teile auf. Hierbei kann es sich um ein Außenrohr und ein längsverschieblich darin gelagertes Innenteil handeln. Solche Anordnungen werden auch als Teleskopanordnungen bezeichnet. Üblicherweise weist ein erstes der beiden Teile eine Rastbahn auf und das zweite Teil ein Rastmittel. Das Rastmittel kann in einen Kontakt mit der Rastbahn gebracht werden, in welchem die beiden Teile dann unbeweglich aneinander gehalten sind. Hierzu kann das Rastmittel im Kontakt mit der Rastbahn mittels einer Handhabe arretiert werden. Die Handhabe kann hierzu gegenüber dem Rastmittel verschraubt werden, wobei eine Stirnfläche der Handhabe gegen das Rastmittel drückt. Das Rastmittel kann so gegen die Rastbahn des jeweils anderen Teils gedrückt werden. Auf diese Weise kann die einmal eingestellte Relativposition der beiden Teile zueinander, d. h. beispielsweise die Griffhöhe eines Rollators, fixiert werden.

Wenngleich sich die bekannten Rastanordnungen im alltäglichen Einsatz durchaus bewährt haben, besteht dennoch Verbesserungsbedarf. Bei den Verwendern von Mobilitätshilfen und somit den Verwendern gattungsgemäßer Rastanordnungen handelt es sich üblicherweise um in ihrer Motorik eingeschränkte Personen. Die Handhabung einer Mobilitätshilfe sollte daher so einfach wie möglich sein.

Vor diesem Hintergrund ist es die **Aufgabe** der vorliegenden Erfindung, die Handhabung einer gattungsgemäßen Rastanordnung zu verbessern, insbesondere zu vereinfachen.

Zur **Lösung** schlägt die Erfindung vor, dass das Rastmittel von einer schwenkbar gelagerten Wippe angetrieben ist, wobei die Wippe mittels der Handhabe in einer das Rastmittel im Kontakt mit der Rastbahn arretierenden Konfiguration fixierbar ist.

Die Erfindung schlägt mit anderen Worten vor, das Rastmittel nicht unmittelbar mit der Handhabe anzutreiben, sondern unter Zwischenordnung einer Wippe. Wippe im Sinne der Erfindung meint einen Hebel, einen Balken und/oder dergleichen. Die Wippe weist drei Funktionsbereiche auf. In einem ersten Funktionsbereich ist die Wippe schwenkbar gelagert. Dies umfasst eine feste Einspannung der Wippe, wobei die Wippe selbst elastisch biegbar ausgebildet ist. Dies umfasst aber auch die drehbare Lagerung der Wippe um eine Achse. Entscheidend ist, dass die Wippe entlang einer Bahn bewegbar ist, wobei die Bewegung zumindest teilweise rotatorisch ausgebildet ist. Ein zweiter Funktionsbereich der Wippe dient dem Antrieb des Rastmittels. Das Rastmittel kann unmittelbar mit der Wippe verbunden sein oder einstückig mit der Wippe ausgebildet sein. Die Wippe und das Rastmittel können aber auch unabhängig voneinander handhabbare Einzelteile sein. Entscheidend ist, dass eine Bewegung der Wippe zumindest in einem Teilbereich des möglichen Bewegungswegs der Wippe zu einem Antrieb, d. h. einer Bewegung des Rastmittels führt. In einem dritten Funktionsbereich wirkt die Wippe mit der Handhabe zusammen. Die Wippe und zumindest ein Bestandteil der Handhabe können einstückig miteinander verbunden sein, beispielsweise verschraubt oder verschweißt. Bei der Handhabe und der Wippe kann es sich aber auch um unabhängig voneinander handhabbarer Einzelteile handeln. Entscheidend ist, dass mittels der Handhabe die Wippe in einer ganz bestimmten Konfiguration fixiert werden kann. Fixiert meint, dass die Wippe dann nicht ohne Betätigung der Handhabe rücktreibbar ist. Fixiert meint insbesondere, dass die Wippe unbeweglich gehalten ist, insbesondere in Bezug auf die zwei relativ zueinander bewegbaren Teile, die Rastbahn und/oder dergleichen.

Das Rastmittel kann ein Nocken, eine Nase, eine auf der Wippe ausgebildete Reibfläche, ein Rastzylinder und/oder dergleichen sein. Entscheidend ist, dass das Rastmittel zur Rastbahn korrespondiert. Die Rastbahn kann Ausnehmungen aufweisen, welche voneinander beabstandet sind, insbesondere äquidistant. Das beispielsweise als Nocken oder Rastzylinder ausgebildete Rastmittel kann in die einzelnen Ausnehmungen der Rastbahn eingreifen. Der Kontakt zwischen dem Rastmittel und der Rastbahn kann formschlüssig und/oder reibschlüssig ausgebildet sein. Entscheidend ist, dass die Wippe mittels der Handhabe derart fixiert werden kann, dass ein Kontakt des Rastmittels mit der Rastbahn arretiert wird. Das Rastmittel ist dann fest mit der Rastbahn im Eingriff. Eine Bewegung der beiden sonst relativ zueinander bewegbaren Teile ist dann nicht mehr möglich.

Mittels der Handhabe kann insbesondere der Bewegungsweg der Wippe eingeschränkt werden. Die Handhabe stellt dann einen Anschlag bereit, an welchem die Wippe bei einer Bewegung anschlägt. Durch eine Betätigung der Handhabe kann die Position des Anschlags relativ zur Wippe verstellt werden. Die Handhabe kann insbesondere in eine solche Position gebracht werden, in welcher der Bewegungsweg der Wippe vollständig eingeschränkt wird. D. h. die Handhabe drückt die Wippe in einen Bewegungsendpunkt hinein.

In einer nicht arretierenden Konfiguration gibt die Handhabe den Bewegungsweg der Wippe frei. Die Wippe kann dann frei zwischen zwei Bewegungsendpunkten verschwenken. Das Rastmittel kann in dieser Konfiguration ebenfalls frei bewegt werden, nämlich von einer im Kontakt mit der Rastbahn stehenden Konfiguration und einer außer Kontakt mit der Rastbahn stehenden Konfiguration. Sofern der Bewegungsweg der Wippe durch Betätigung der Handhabe eingeschränkt wird, d. h. die Wippe mittels der Handhabe in die arretierende Konfiguration überführt wird, kann auch das Rastmittel nicht mehr außer Kontakt mit der Rastbahn bewegt werden. Das Rastmittel und die Rastbahn sind dann in einem festen Eingriff. Die beiden relativ zueinander bewegbaren Teile können nicht mehr gegeneinander bewegt werden.

Mit der Erfindung wird eine Rastanordnung erreicht, bei welcher das Rastmittel nicht unmittelbar von der Handhabe betätigt wird, sondern unter Zwischenordnung einer Wippe. Diese Wippe erlaubt es, die kinematischen Verhältnisse zwischen der Betätigung und der Handhabe einerseits und des Rastmittels andererseits einstellen zu können. Durch die Wippe kann gewählt werden, welcher Bewegungsweg und welche Kräfte/Momente an der Handhabe erforderlich sind, um das Rastmittel mit einer definierten Kraft in Richtung der Rastbahn zu halten. Es ist nicht mehr, wie aus dem Stand der Technik bekannt, erforderlich, dass die erforderlichen Kräfte und der erforderliche Weg, um das Rastmittel in die arretierende Konfiguration zu überführen, unmittelbar an der Handhabe aufgebracht werden müssen. Es kann vielmehr ein solches kinematisches Verhältnis gewählt werden, bei welchem beispielsweise eine nur geringe Betätigungskraft an der Handhabe erforderlich ist, um das Rastmittel mit einer ausreichenden Kraft zu beaufschlagen, um es sicher in der arretierenden Konfiguration zu halten. Dies kommt Benutzern zugute, deren Mobilität und Motorik eingeschränkt ist und die nur geringe Kräfte aufbringen können. Insofern geht mit einer erfindungsgemäßen Rastanordnung eine vereinfachte und insgesamt verbesserte Handhabung einher.

Gemäß einer vorteilhaften Weiterbildung der Erfindung ist die Wippe um einen Angelpunkt drehbar gelagert. Die Wippe kann an einem Drehgelenk angeordnet sein. Die Wippe kann aber auch mit einem Auflager an einem Gegenstück anschlagen, und um den Kontaktpunkt zwischen dem Auflager und dem Gegenstück drehen. Entscheidend ist, dass die Wippe als Hebel verwendet werden kann. Insbesondere ist vorgesehen, dass das Rastmittel näher an dem Angelpunkt angeordnet ist als ein Kontaktpunkt zwischen der Handhabe und der Wippe. Der Abstand zwischen dem Rastmittel und dem Angelpunkt ist also geringer als der Abstand zwischen dem Angelpunkt und dem Angriffspunkt der Handhabe an der Wippe. Entsprechend der Hebelgesetze ist somit zur Erzeugung einer bestimmten Kraft auf das Rastmittel eine entsprechend geringere Kraft an der Handhabe erforderlich. Die zur Betätigung der Handhabe erforderliche Kraft lässt sich somit sehr gering wählen. Dies erleichtert die Handhabung der Rastanordnung für in ihrer Mobilität eingeschränkte Verwender.

Gemäß einer vorteilhaften Weiterbildung der Erfindung weist die Rastanordnung eine Verstellkonfiguration auf, wobei ein Kontakt zwischen dem Rastmittel und der Rastbahn in der Verstellkonfiguration durch eine Betätigung der beiden relativ zueinander bewegbaren Teile rücktreibbar ist, und wobei das Rastmittel und die Rastbahn in der arretierenden Konfiguration unbeweglich miteinander verbunden sind. Neben der arretierenden Konfiguration, welche vorstehend beschrieben wurde, ist eine Verstellkonfiguration vorgesehen. In der Verstellkonfiguration stehen das Rastmittel und die Rastbahn ebenfalls im Kontakt miteinander. Dieser Kontakt ist allerdings nicht arretiert. Durch eine Bewegung der beiden Teile zueinander kann der Kontakt rückgetrieben werden. Es ist vorgesehen, dass der Kontakt zwischen dem Rastmittel und der Rastbahn in der Verstellkonfiguration die beiden relativ zueinander bewegbaren Teile aneinanderhält. Dieser Kontakt zwischen dem Rastmittel und der Rastbahn kommt in der Verstellkonfiguration durch eine die Gewichtskraft des einen oder des anderen der beiden relativ zueinander bewegbaren Teile übersteigende Kraft zu Stande. Mit anderen Worten klappen die zwei relativ zueinander bewegbaren Teile in der Verstellkonfiguration nicht durch Schwerkrafteinfluss zusammen. Die in der Verstellkonfiguration wirkende Kontaktkraft ist allerdings derart gering gewählt, dass der Kontakt zwischen dem Rastmittel und der Rastbahn durch eine Betätigung der beiden relativ zueinander bewegbaren Teile rücktreibbar ist. D. h. die Beaufschlagung der beiden Teile mit einer Kraft, welche die Gewichtskraft des einen oder des anderen bewegbaren Teils übersteigt, reicht aus, um die Kontaktkraft zu überwinden. In der Verstellkonfiguration kann ein Verwender die Länge des mit der Rastanordnung versehenen Teils leicht einstellen. Die eingestellte Länge bleibt auch nach dem Loslassen der beiden Teile erhalten. Der Verwender kann dann, ohne die Konfiguration der Rastanordnung manuell sichern zu müssen, die Handhabe betätigen um die Rastanordnung in die arretierende Konfiguration zu überführen. Die einzelnen Schritte bestehend aus dem Lösen der Handhabe, dem anschließenden Verstellen der beiden Teile zueinander und dem daran anschließenden erneuten Arretieren der Handhabe können somit völlig unabhängig voneinander durchgeführt werden. Folglich ist die Handhabung einer in der zuvor beschriebenen Weise ausgebildeten Rastanordnung gegenüber dem Stand der Technik vereinfacht.

Gemäß einer vorteilhaften Weiterbildung der Erfindung ist die Wippe federgelagert. Die Wippe selbst kann federelastisch verbiegbar ausgebildet sein. Die Wippe kann dann mit einem Ende fest eingespannt sein und unter elastischer Verbiegung verschwenkt werden. Die Wippe kann aber auch unter Zwischenordnung eines Federelements mit einem weiteren Bauteil, beispielsweise einem der beiden relativ zueinander bewegbaren Teile, angeordnet sein. Bevorzugt ist die Wippe derart unter Federspannung gelagert, dass das Rastmittel in Richtung der Rastbahn gedrängt wird. Die Wippe ist derart durch Federkraft beaufschlagt, dass sie das Rastmittel in Richtung der Rastbahn drückt. Das bedeutet, dass das Rastmittel unabhängig von der Konfiguration der Handhabe in eine im Kontakt mit der Rastbahn stehende Konfiguration gedrückt wird. Die Wippe kann von einer der Rastbahn abgewandten Seite gegen das Rastmittel drücken. Entscheidend ist, dass die Federspannung in der Verstellkonfiguration dazu führt, dass der Kontakt zwischen dem Rastmittel und der Rastbahn unabhängig von der Stellung der Handhabe ausgebildet ist und zudem die Rücktreibbarkeit dieses Kontakts dadurch erreicht wird, dass die Wippe entgegen der auf sie wirkenden Federkraft zurückschwenken kann. Bei der Feder kann es sich um eine Schraubenfeder, eine Tellerfeder, eine Torsionsfeder und/oder dergleichen handeln. Die Feder kann als ein zwischen dem zweiten Teil und der Wippe angeordneter Schaumstoffblock ausgebildet sein. Als Material kann ein Polyurethanschaum verwendet werden. Die Feder dient nicht nur des Haltens der Wippe in der Verstellkonfiguration, sondern führt auch dazu, dass die an der Handhabe aufzubringende Kraft zur Überführung in die arretierende Konfiguration um den aus der Federkraft resultierenden Anteil geringer sein kann. Dies führt insgesamt zu einer erleichterten Handhabung.

Gemäß einer vorteilhaften Weiterbildung der Erfindung ist das Rastmittel als ein in einem Langloch beweglich geführter Rastzylinder ausgebildet. Das Langloch kann im zweiten Teil ausgebildet sein. Das Langloch erstreckt sich quer, insbesondere rechtwinklig zur Rastbahn. Der im Langloch geführte Rastzylinder erstreckt sich quer, insbesondere rechtwinklig zur Rastbahn und zum Langloch. Der Rastzylinder kann innerhalb des Langlochs zwischen einer mit der Rastbahn im Kontakt stehenden Konfiguration und einer mit der Rastbahn außer Kontakt stehenden Konfiguration bewegt werden. Bevorzugt sind in zwei Seitenwänden eines Bauteils, beispielsweise des zweiten Teils, spiegelbildlich ausgebildete Langlöcher vorgesehen, welche jeweils eines der Enden des Rastzylinders aufnehmen.

Gemäß einer vorteilhaften Weiterbildung der Erfindung ist an der Wippe ein Zweitrastmittel zur Ausbildung eines zusätzlichen Kontakts mit der Rastbahn angeordnet. Das Zweitrastmittel kann eine Reibfläche, ein Nocken, eine Nase und/oder dergleichen sein. Das Zweitrastmittel kann derart ausgebildet sein, dass es in der Verstellkonfiguration außer Kontakt mit der Rastbahn ist. Das Zweitrastmittel kann derart ausgebildet sein, dass es nur mittels der Handhabe in der arretierenden Konfiguration in Kontakt mit der Rastbahn steht. Das Zweitrastmittel dient der ergänzenden Kontaktierung zwischen den beiden relativ zueinander bewegbaren Teilen. Das Zweitrastmittel kann einstückig mit der Wippe ausgebildet sein. Unter Verwendung des Zweitrastmittels wird ein besonders sicherer Kontakt hergestellt, d. h. die arretierende Konfiguration kann besonders sicher erreicht werden. Dies erhöht die Handhabung und Betriebssicherheit einer mit der Rastanordnung ausgestatteten Mobilitätshilfe zusätzlich.

Die Erfindung betrifft zudem einen längenverstellbaren Holm für eine Mobilitätshilfe mit einer zuvor beschriebenen Rastanordnung, wobei der Holm ein Außenrohr und einen längsbeweglich darin geführten Kolben aufweist, wobei die Rastbahn am Kolben und das Rastmittel am Außenrohr angeordnet ist. Ein derartiger Holm kann auch als Stütze, Profilelement oder dergleichen bezeichnet werden. Längenverstellbar umfasst die Begriffe teleskopierbar, längsverschieblich und dergleichen. Mit einem Außenrohr ist ein Rohr beliebigen Querschnitts gemeint, wobei jedoch in jedem Fall eine Art innerer Kanal zur Aufnahme eines Innenteils, nämlich des Kolbens, vorgesehen sein muss. Das Außenrohr und der darin geführte Kolben können im Querschnitt kreisrund, oval, quadratisch, rechteckig und/oder dergleichen sein. An einem oberen, freien Ende des längsbeweglich geführten Kolbens kann ein Handgriff angeordnet sein.

Gemäß einer vorteilhaften Weiterbildung des zuvor beschriebenen Holms umfasst das Außenrohr eine lösbar daran angeordnete Befestigungseinrichtung, an welcher Befestigungseinrichtung das Rastmittel angeordnet ist. Die Befestigungseinrichtung mit dem daran vorgesehenen Rastmittel kann somit von den übrigen Teilen des Holms getrennt werden. Dies erleichtert die Montage, die Wartung und dergleichen. Dadurch wird die Handhabung insgesamt weiter verbessert, insbesondere vereinfacht.

Gemäß einer vorteilhaften Weiterbildung des zuvor beschriebenen längenverstellbaren Holms ist an einem in das Außenrohr einzuführenden Bereich des Kolbens ein bedarfsweise in unterschiedlichen Positionen befestigbarer Auszugbegrenzer angeordnet. Der Auszugbegrenzer dient zum Verhindern eines vollständigen Herausziehens des Kolbens aus dem Außenrohr. Der Auszugbegrenzer bildet einen Anschlag, mit welchem der Kolben in einer Endposition in Auszugrichtung am Außenrohr anschlägt. Durch den Auszugbegrenzer erhält der Kolben eine solche Querschnittsgeometrie, welche den inneren Querschnitt des Außenrohrs überragt. Der Auszugbegrenzer ist in unterschiedlichen Positionen am Kolben anordenbar. Ein Verwender der mit dem Kolben ausgestatteten Mobilitätshilfe kann den Auszugbegrenzer in einer gewünschten Position montieren. Hierbei kann es sich um diejenige Position handeln, in welcher der bis zum Anschlag des Auszugbegrenzers aus dem Außenrohr herausgezogene Kolben die für den jeweiligen Verwender vorgesehene Betriebshöhe aufweist. Auf diese Weise lässt sich der Holm sehr einfach in die für den Verwender gewünschte Betriebsposition überführen. Der Kolben mit dem Auszugbegrenzer ist besonders gut zu montieren und somit einfach zu handhaben, wenn am Außenrohr die zuvor bereits beschriebene lösbare Befestigungseinrichtung vorgesehen ist. Der Auszugbegrenzer kann dann derart ausgebildet sein, dass er zusammen mit dem Kolben bei gelöster Befestigungseinrichtung in das Außenrohr eingeführt werden kann. Anschließend wird die Befestigungseinrichtung am Außenrohr montiert. Der Kolben mit dem Auszugbegrenzer kann dann nicht wieder aus dem Außenrohr herausgezogen werden. Die Befestigungseinrichtung ihrerseits kann mit dem Außenrohr verbunden werden, beispielsweise durch eine Schraubverbindung, eine Rastverbindung oder dergleichen.

Die Erfindung betrifft zudem einen Rollator mit zwei zuvor beschriebenen längenverstellbaren Holmen, wobei die längenverstellbaren Holme als einen Handgriff tragende Griffholme dienen und jeweils auf einem Radholm angeordnet sind, wobei an den Radholmen Räder angeordnet sind. Bei Rollatoren handelt es sich um Gehhilfen. Ein Rollator umfasst üblicherweise zwei Radholme, an denen Räder angeordnet sind, und zwei quer zu den Radholmen ausgerichtete Griffholme, an deren oberen Enden Handgriffe angeordnet sind. Ein Verwender greift mit seinen Händen die Griffe und kann sich dann auf dem Rollator abstützen und den Rollator über einen Untergrund verfahren. Dadurch kann sich der Verwender geführt bewegen. Ein erste Radholm und ein erster Griffholm bilden zusammen ein erstes Seitenteil. Ein zweiter Radholm und ein zweiter Griffholm bilden zusammen ein zweites Seitenteil. Die beiden Seitenteile sind relativ zueinander verschiebbar ausgebildet. Der Rollator kann so von einer Betriebskonfiguration in eine Transportkonfiguration überführt werden, wobei der Abstand zwischen den beiden Seitenteilen in der Transportkonfiguration geringer ist als in der Betriebskonfiguration. Der Rollator hat in der Transportkonfiguration besonders kompakte Maße, wenn die Griffholme zuvor soweit es geht zusammengeschoben werden. Hierzu sind die Griffholme höhenverstellbar ausgebildet. Am Griffholm ist eine erfindungsgemäße Rastanordnung vorgesehen. Das Rastmittel ist hierbei an einem Außenrohr angeordnet und die Rastbahn an einem im Außenrohr längsverschieblich geführten Kolben. Aufgrund der zuvor beschriebenen Vorteile der erfindungsgemäßen Rastanordnung, wird die Handhabung eines erfindungsgemäßen Rollators gerade für ältere und/oder in ihrer Motorik eingeschränkte Personen deutlich vereinfacht.

Weitere Vorteile und Merkmale ergeben sich anhand der nachfolgenden Figurenbeschreibung. Es zeigen:
- Fig. 1: beispielhaft einen Rollator mit längenverstellbaren Holmen, bei welchen eine Ausführungsform einer erfindungsgemäßen Rastanordnung zum Einsatz kommt;
- Fig. 2: eine perspektivische Draufsicht auf die beiden relativ zueinander bewegbaren Teile der Rastanordnung aus Fig. 1;
- Fig. 3: einen Kolben als das erste bewegbare Teil aus Fig. 2;
- Fig. 4: den Kolben gemäß Fig. 3 mit einem einen Rastzylinder tragenden Einsatz;
- Fig. 5: die Einzelteile der Rastanordnung aus Fig. 1;
- Fig. 6: einige Einzelteile aus Fig. 5 in einer alternativen Ansicht;
- Fig. 7: schematisch das Prinzip einer Ausführungsform einer erfindungsgemäßen Rastanordnung in einer Verstellkonfiguration und in einer arretierenden Konfiguration; und
- Fig. 8: eine Ausführungsform eines Rollators mit zusätzlichen Funktionalitäten.

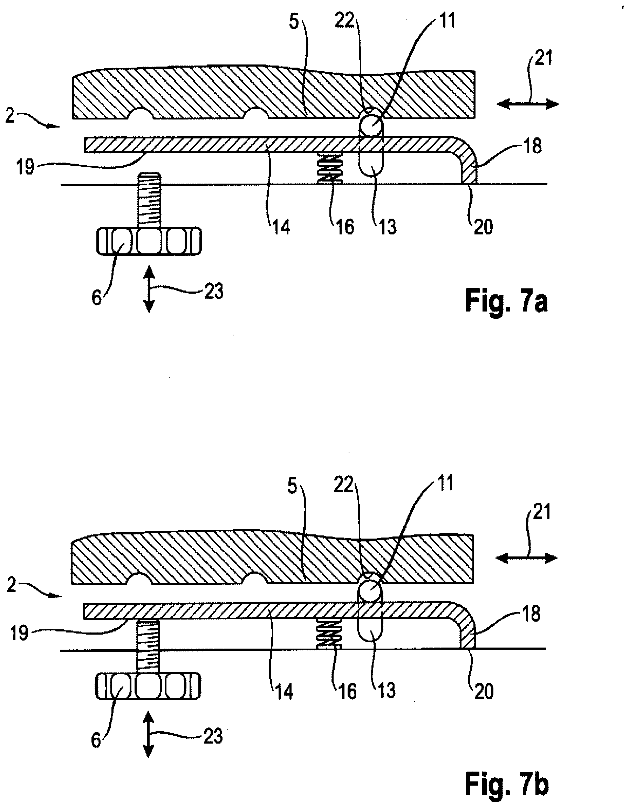

Die Figuren 7a und 7b zeigen schematisch das Prinzip einer Ausführungsform einer erfindungsgemäßen Rastanordnung 2. Diese Rastanordnung weist neben einer arretierenden Konfiguration (Fig. 7b) eine Verstellkonfiguration auf, in welcher zwar ein Kontakt zwischen einen als Rastzylinder 11 ausgebildeten Rastmittel und einer Ausnehmung in einer Rastbahn 5 ausgebildet ist, dieser jedoch durch eine Bewegung des die Rastbahn 5 bereitstellenden Teils einerseits und des den Rastzylinder 11 bereitstellenden Teils andererseits gegeneinander in Bewegungsrichtung 21 zurückgetrieben werden kann. Dies ist in Fig. 7a dargestellt. Während die Rastbahn 5 zu einem ersten Teil gehört, gehören die übrigen, in Fig. 7a dargestellten Komponenten zu einem zweiten Teil, welches in Bewegungsrichtung 21 gegenüber dem ersten Teil verschiebbar ist.

Die Rastbahn 5 weist mehrere voneinander beabstandete Ausnehmungen 22 auf. Der Rastzylinder 11 kann in die Ausnehmungen 22 eingreifen. In Bezug auf die Bewegungsrichtung 21 ist bei einem Eingriff eine formschlüssige Verbindung zwischen der Rastbahn 5 und dem Rastzylinder 11 ausgebildet. Der Rastzylinder 11 wird von hinten durch eine Wippe 14 gelagert. Die Wippe 14 treibt den Rastzylinder 11 an. Die Wippe 14 ist L-förmig ausgebildet. Der waagerechte Schenkel des L bildet einen Ansatz 18. Mit einer Stirnfläche des Ansatzes 18 stützt sich die Wippe 14 gegenüber einem Untergrund ab. Zwischen der Stirnfläche des Ansatzes 18 und dem Untergrund bildet sich ein Angelpunkt 20. Die Wippe 14 ist um diesen Angelpunkt 20 verschwenkbar.

Die Wippe 14 ist zudem gegenüber dem Untergrund durch eine Feder 16 gelagert. Hierbei kann es sich um eine Schraubenfeder, ein Schaumstoffelement oder dergleichen handeln. Die Feder 16 drückt die Wippe 14 in eine Konfiguration, in welcher der Rastzylinder 11 mit der Ausnehmung 22 der Rastbahn 5 in Eingriff ist. Eine Bewegung der beiden Teile gegeneinander in Bewegungsrichtung 21 ist nicht ohne weiteres möglich. Übersteigt jedoch eine die beiden Teile auseinanderziehende Kraft eine bestimmte Schwellkraft, führt diese dazu, dass der Rastzylinder 11 in Richtung der Wippe 14 gedrückt wird, die Wippe 14 die Feder 16 zusammenstaucht und der Rastzylinder 11, da er in einem Langloch 13 geführt ist, in eine außer Eingriff mit der Ausnehmung 22 befindliche Position verschwenkt. In der in Fig. 7a gezeigten Verstellkonfiguration sind also das die Rastbahn 5 tragende Teil und das den Rastzylinder 11 tragende Teil in Ruhe miteinander verbunden, können jedoch durch Beaufschlagung mit einer eine bestimmte Schwerkraft übersteigenden Kraft in Bewegungsrichtung 21 gegeneinander verschoben werden.

Dies ist in der in Fig. 7b gezeigten das Rastmittel im Kontakt mit der Rastbahn arretierenden Konfiguration nicht mehr möglich. An dem den Rastzylinder 11 tragenden Teil ist eine Handhabe 6 angeordnet. Diese umfasst einen Handgriff sowie eine damit betätigte Gewindestange. Die Handhabe 6 kann relativ zur Wippe 14 verschraubt werden. Durch ein entsprechendes Gewinde wird eine Drehbewegung an der Handhabe 6 in eine translatorische Bewegung in Betätigungsrichtung 23 umgewandelt. Sofern die Handhabe 6 in Richtung der Wippe 14 eingeschraubt wird, kommt eine vordere Stirnfläche der Handhabe 6 mit einem Kontaktbereich 19 der Wippe 14 in Kontakt. Die durch die Handhabe 6 auf die Wippe 14 wirkende Kraft wird von dem Rastzylinder 11 einerseits und dem Ansatz 18 andererseits aufgenommen. Die Folge ist, dass der Rastzylinder 11 in die Ausnehmung 22 der Rastbahn 5 hineingedrückt wird. Da die Handhabe 6 deutlich weiter vom Angelpunkt 20 der Wippe 14 entfernt ist als der Rastzylinder 11, wird durch die damit verbundene Hebelwirkung die Anpresskraft des Rastzylinders 11 in die Ausnehmung 22 noch verstärkt. Insofern reicht ein geringes Drehmoment beim Betätigen der Handhabe 6 bereits aus, um eine hohe Anpresskraft des Rastzylinders 11 in Richtung der Ausnehmung 22 zu erreichen. Durch diese Betätigung der Handhabe 6 ist der Kontakt zwischen dem Rastzylinder 11 und der Rastbahn 5 arretiert und kann auch nicht durch von einem normalen Verwender aufbringbare Kräfte in Bewegungsrichtung 21 rückgetrieben werden.

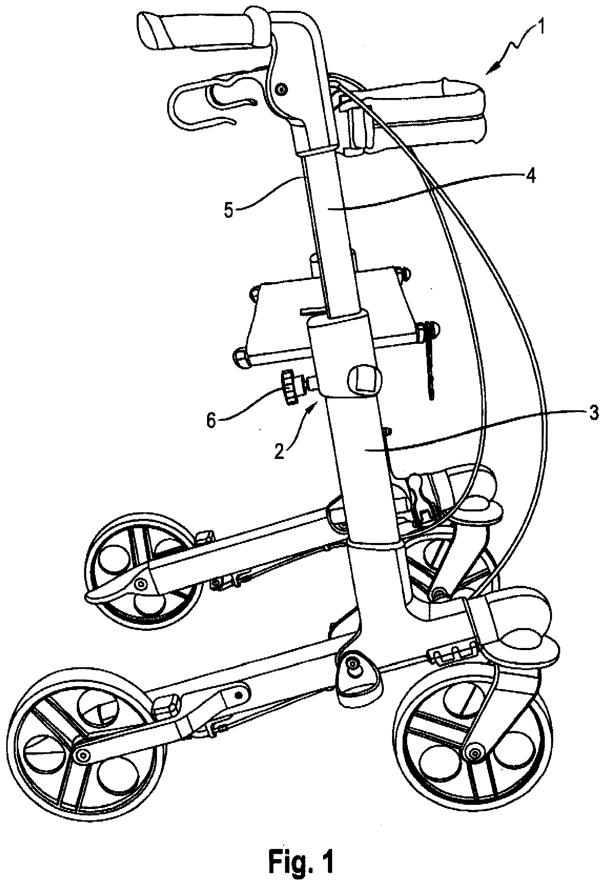

Wie vorstehend bereits beschrieben, ist eine nach der Erfindung ausgebildete Rastanordnung 2 besonders gut bei Mobilitätshilfen wie beispielsweise an einem Rollator 1 verwendbar, wie in Fig. 1 dargestellt. Hier dient sie dazu, einen senkrechten Holm des Rollators 1 längenverstellbar auszubilden. Der Holm umfasst ein Außenrohr 3 sowie einen darin beweglich geführten Kolben 4. An dem Kolben 4 ist die Rastbahn 5 ausgebildet. Am Außenrohr 3 ist die Handhabe 6 angeordnet.

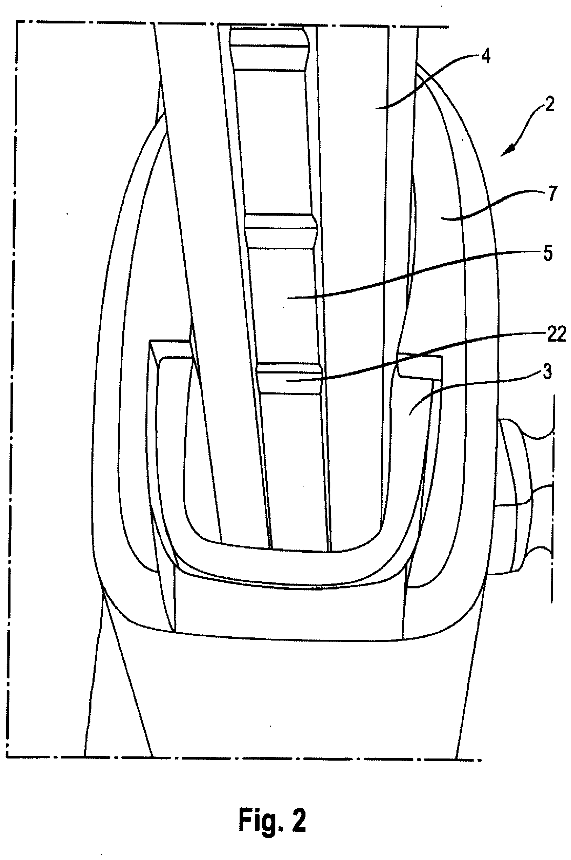

Fig. 2 zeigt eine detaillierte perspektivische Sicht auf das obere Ende des Außenrohrs 3. Ein für einen bestimmungsgenmäßen Betrieb im Außenrohr 3 anzuordnender Einsatz 12 ist entfernt. Auf dem oberen Ende des Außenrohrs 3 ist eine Kappe 7 angeordnet. In dem Außenrohr 3 ist der Kolben 4 aufgenommen. Der Kolben 4 trägt die Rastbahn 5. Auf der Rastbahn 5 sind in bestimmten Abständen Ausnehmungen 22 ausgebildet.

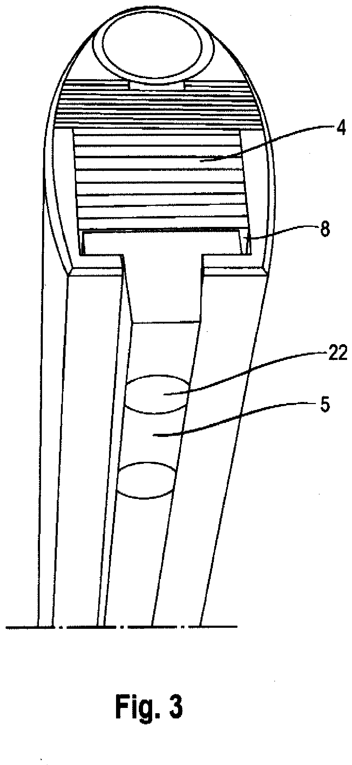

Fig. 3 zeigt den Kolben 4 mit der Rastbahn 5 im Detail. Während der Kolben 4 beispielsweise aus Aluminium ausgebildet sein kann, ist die Rastbahn 5 aus Kunststoff ausgebildet. Der Kolben 4 weist eine hinterschnittene Nut 8 auf. In dieser ist die Rastbahn 5 aufgenommen, insbesondere eingeschoben. Die Rastbahn 5 ist im Querschnitt T-förmig ausgebildet. Am unteren Ende des senkrechten Schenkels des T sind die Ausnehmungen 22 ausgebildet. Der zuvor beschriebene Aufbau hat den Vorteil, dass die Rastbahn 5 in einfacher Weise getauscht werden kann. Sie kann nämlich aus der hinterschnittenen Nut 8 herausgezogen werden und durch eine andere Rastbahn 5 ersetzt werden. Dies erleichtert die Handhabung, insbesondere im Hinblick auf die Wartung.

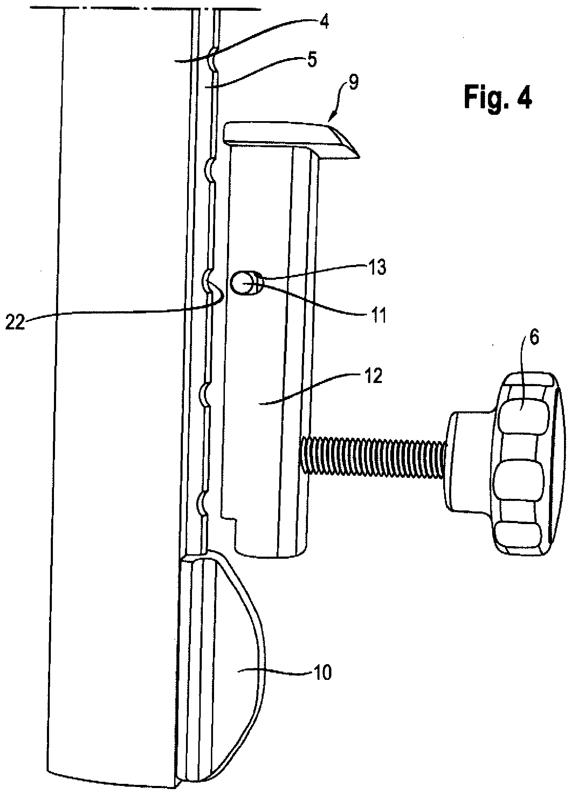

In Fig. 4 ist angedeutet zu sehen, wie der Kontakt zwischen dem Rastzylinder 11 und der Rastbahn 5 zustande kommt. Das Rastzylinder 11 ist in einem Einsatz 12 aufgenommen. Der Einsatz 12 weist ein Langloch 13 auf. Das Langloch 13 erstreckt sich in zwei einander gegenüberliegenden Seitenwänden des Einsatzes 12. Der Rastzylinder 11 ist von der Seite durch die beiden Langlöcher eingeschoben. Jeweils eines der Enden des Rastzylinders 11 ist in einem der Langlöcher 13 aufgenommen.

Durch die Aufnahme in den Langlöchern 13 ist der Rastzylinder 11 in der Figurenebene nach rechts und links beweglich. In der gezeigten Stellung am linken Ende des Langlochs 13 bildet er einen Kontakt mit einer Ausnehmung 22 der Rastbahn 5. Sofern der Rastzylinder 11 am rechten Ende des Langlochs 13 angeordnet wird, steht er außer Kontakt mit der Rastbahn 5.

In den Einsatz 12 ist die Handhabe 6 eingeschraubt. Die Handhabe 6 dient im Einsatz 12 der Kontaktierung der Wippe 14, wie noch beschrieben wird. Der Einsatz 12 mit seinen Komponenten bildet eine Befestigungseinrichtung 9. Die Befestigungseinrichtung 9 wird mit demontierter Handhabe 6 in die in Fig. 2 dargestellte Öffnung im Außenrohr 3 eingeführt. Anschließend kann die Handhabe 6 durch eine nicht dargestellte Bohrung in der Kappe 7 eingeführt werden und im Inneren des Außenrohrs 3 mit dem Einsatz 12 verschraubt werden.

Fig. 4 ist zudem zu entnehmen, dass am unteren Ende des Kolbens 4 ein Auszugbegrenzer 10 angeordnet ist. Der Auszugbegrenzer 10 verhindert, dass der Kolben 4 vollständig aus dem Außenrohr 3 herausgezogen werden kann. Bei montierter Befestigungseinrichtung 9 schlägt der Auszugbegrenzer 10 an der Unterseite des Einsatzes 12 an. Der Kolben 4 mit dem Auszugbegrenzer 10 kann daher nur dann aus dem Außenrohr 3 herausgezogen werden, wenn die Befestigungseinrichtung 9 zuvor demontiert wird.

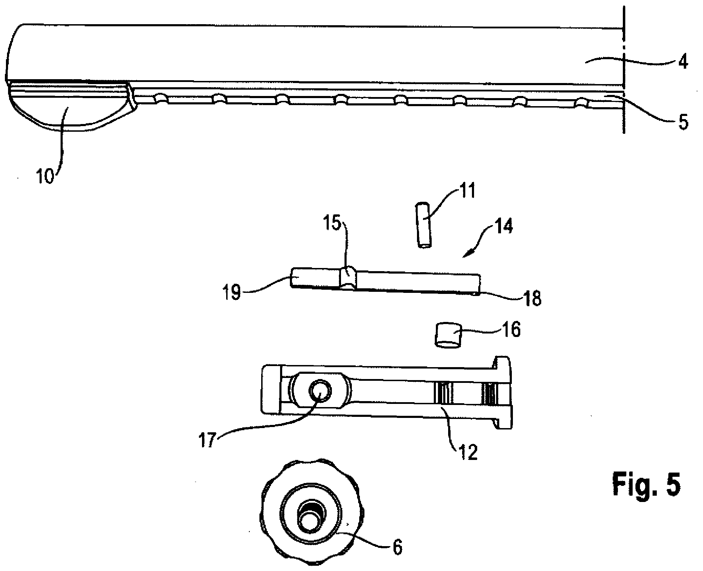

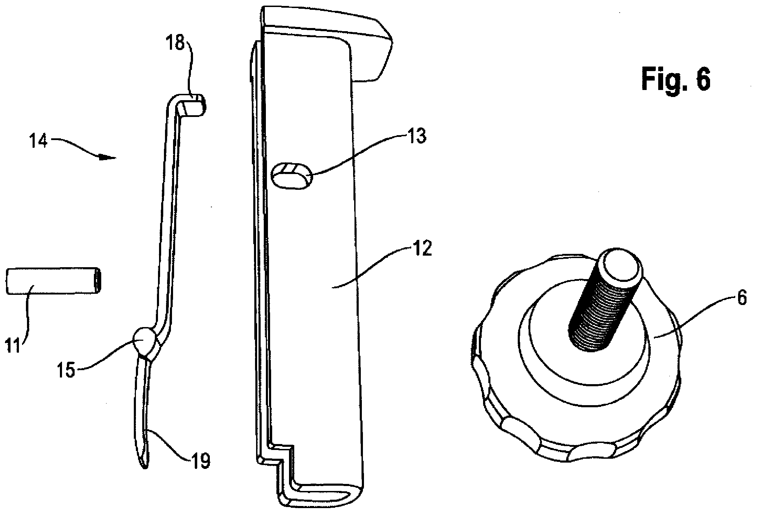

Die Figuren 5 und 6 zeigen Einzelteile der Ausführungsform der Rastanordnung 2. Zu sehen ist, dass der Rastzylinder 11 ein einfacher Stift, beispielsweise aus Metall, ist. Die Wippe 14 weist an dem einen Ende den zuvor bereits beschriebenen Ansatz 18 auf. An der Wippe 14 ist zudem ein Zweitrastmittel 15 vorgesehen. Dieses ist vorliegend als unmittelbar an die Wippe 14 angeformte Nase ausgebildet. Das Zweitrastmittel 15 kann ebenfalls mit einer Ausnehmung 22 in der Rastbahn 5 in Kontakt gebracht werden. Der Abstand zwischen dem Zweitrastmittel 15 und dem Rastzylinder 11 ist derart gewählt, dass er dem Abstand zweier Ausnehmungen 22 der Rastbahn 5 oder einem Vielfachen davon entspricht. Dadurch kann sichergestellt werden, dass immer sowohl der Rastzylinder 11 als auch das Zweitrastmittel 15 mit der Rastbahn 5 in Eingriff gebracht werden können.

Die Montage der Befestigungseinrichtung 9 geht wie folgt vonstatten. In den Einsatz 12 wird die Feder 16 in Form eines Schaumstoffblocks eingebracht, beispielsweise geklebt. Anschließend wird die Wippe 14 in den Einsatz 12 eingelegt. Daran anschließend wird der Rastzylinder 11 in die durch die beiden Langlöcher 13 gebildete Aufnahme eingeschoben. Die Wippe 14 drückt in diesem Zustand infolge der durch die Feder 16 erzeugten Federkraft gegen den Rastzylinder 11.

Nachdem der Kolben 4 mit der Rastbahn 5 in das Außenrohr 3 eingeführt worden ist, wird die zuvor montierte Befestigungseinrichtung 9 in die entsprechende Ausnehmung im Außenrohr 3 eingeführt. Anschließend wird die Handhabe 6 durch eine Öffnung in der Kappe 7 in das Außenrohr 3 eingeführt und mit einer Gewindebohrung 17 im Einsatz 12 in Kontakt gebracht und verschraubt. Anschließend kann der senkrechte Holm des Rollators 1 wie anhand der schematischen Figuren 7a und 7b durch Betätigung der Rastanordnung 2 längenverstellt werden.

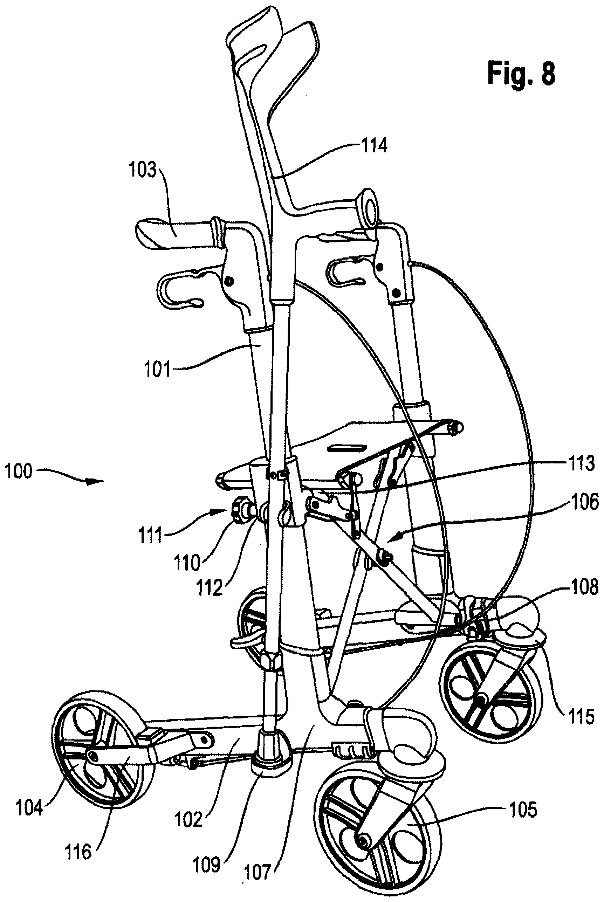

Fig. 8 zeigt einen Rollator 100. Dieser weist eine Ausführungsform der Erfindung und daneben noch weitere Merkmale, welche synergetisch mit den erfindungsgemäßen Merkmalen zusammenwirken können, auf. Die weiteren Merkmale können in Kombination oder unabhängig voneinander am Rollator 100 vorgesehen sein.

Der Rollator 100 weist zwei Seitenteile auf, welche durch eine Gelenkanordnung 106 miteinander verbunden sind. Jedes Seitenteil weist einen Griffholm 101 und einen Radholm 102 auf. Der Griffholm 101 steht quer auf dem Radholm 102. Am oberen Ende des Griffholms 101 sind Handgriffe 103 angeordnet. Am Radholm 102 sind jeweils ein Vorderrad 105 und ein Hinterrad 104 angeordnet. Ein Verwender kann den Rollator 100 an den Handgriffen 103 greifen und sich dann durch Verfahren des Rollators 100 durch diesen geführt bewegen.

Die Gelenkanordnung 106 ist als Scherengelenk ausgebildet. Zwei obere Enden der Gelenkanordnung 106 sind drehbar an den Griffholmen 101 angeordnet. Der Griffholm 101 ist höhenverstellbar ausgebildet. Hierzu weist er ein Außenrohr und ein darin verschieblich geführtes Innenrohr auf. Auf dem oberen Ende des Außenrohrs sitzt eine Kappe 110. Diese dient der Aufnahme eines Befestigungselements 111, welches einer Betätigung des Höhenverstellmechanismus des Griffholms 101 dient.

Das obere Ende der Gelenkanordnung 106 ist ebenfalls an der Kappe 110 angeordnet. Hierzu weist die Kappe 110 eine entsprechende Aufnahme auf. Diese kann als Bohrung zur Aufnahme einer Drehachse ausgebildet sein. Neben dieser zweiten Funktionalität die Kappe 110 noch zwei weitere Funktionen auf.

Hierbei handelt es sich zum einen um die Funktion als Auflager für eine an einem oberen Ende der Gelenkanordnung angebrachte Querstrebe. Diese Querstrebe kommt in der Betriebskonfiguration auf dem Auflager 113 zum Anliegen.

Zum anderen handelt es sich um einen an der Kappe 110 vorgesehenen Halter 112. Dieser Halter 112 dient der Aufnahme von Funktionselementen, wie beispielsweise einer Halterung für eine Krücke 114, wie dies in der Figur dargestellt ist. An dem Halter 112 können aber auch andere Funktionselemente angebracht werden, beispielsweise einen Schirmhalter oder dergleichen. Entscheidend ist, dass die Funktionselemente am Halter 112 abnehmbar und auswechselbar angeordnet werden können. Der Halter 112 kann als im Profil T-förmige Schiene ausgebildet sein. Diese kann sich im Wesentlichen senkrecht erstrecken. Ein Ende der Schiene kann verdickt ausgebildet sein, so dass ein auf den Halter 112 aufgeschobenes Teil dort zum Anliegen kommt.

In synergetischer Weise ist es also möglich, mit der Kappe 110 mehrere verschiedene Funktionalitäten gleichzeitig bereitstellen zu können.

Der Griffholm 101 und der Radholm 102 sind mittels eines Verbinders 107 schwenkbar miteinander verbunden. Der Verbinder 107 nimmt ein Ende des Griffholms 101 lagefixiert auf. Der Verbinder 107 ist um eine den Radholm 102 durchgreifende Achse verdrehbar. Der Griffholm 101 und der Radholm 102 können somit gegeneinander verschwenkt werden.

Der Verbinder 7 erfüllt darüber hinaus jedoch noch weitere Funktionalitäten. An einer Innenseite kann er eine Gelenkaufnahme 108 aufweisen. Diese dient der Aufnahme eines unteren Lagers der Gelenkanordnung 106. Der Verbinder 107 kann zudem einen Halter 109 aufnehmen. Dieser kann vorzugsweise drehbar am Verbinder 107 gelagert werden. Der Halter 109 kann an einem Bolzen oder einer Schraube angeordnet werden, welche gleichzeitig die Drehachse des Verbinders 107 bildet. Sofern können am Verbinder 107 in synergetischer Weise mehrere verschiedene Funktionalitäten miteinander verknüpft werden.

Der Halter 109 kann beispielsweise dazu dienen, den Fuß der Krücke 114 aufzunehmen. Dadurch, dass der Halter 109 drehbar gelagert ist, können auch andere Gegenstände oder eine in einem schrägen Winkel angeordnete Krücke 114 aufgenommen werden. Der Halter 109 kann korbförmig ausgebildet sein.

Oberhalb der Vorderräder 105 ist ein Frontschutz 115 vorgesehen. Der Frontschutz 115 überragt das Vorderrad 105 in Fahrtrichtung des Rollators 100. Der Frontschutz 115 dient dazu, einen Kontakt des Vorderrads 105 mit Hindernissen zu verhindern. Dadurch kann die Ausbildung unschöner Spuren an Hindernissen wie Wänden, Türen und dergleichen verhindert werden.

Im Bereich der Hinterräder 104 weist der Rollator 100 einen Kantenabweiser 116 auf. Dieser erstreckt sich vom Radholm 102 ausgehend bis zur Achse des Hinterrads 104. Der Kantenabweiser 116 dient dazu, einen Kontakt des Hinterrads 104 mit Hindernissen zu verhindern. Der Kantenabweiser 116 dient darüber hinaus der Aufnahme einer Bremse für das Hinterrad 104 sowie gleichzeitig als Schutz für diese Bremse. Insofern vereint auch der Kantenabweiser 116 mehrere Funktionalitäten in synergetischer Weise miteinander.

Die Handgriffe 103 zeichnen sich zudem dadurch aus, dass sie eine integrierte Bremshebelmechanik aufweisen. Der Handgriff 103 einerseits und der Bremshebei andererseits bilden somit ein als Einheit handhabbares Bauteil. Die Handhabung für einen Verwender wird dadurch erleichtert, da er es mit weniger Einzelteilen zu tun hat. Zudem sinkt durch die Verringerung der Anzahl an Bauteilen entsprechend die Fehleranfälligkeit des Rollators 100.

Die Handgriffe 103 sind zudem ergonomisch ausgebildet. Dies erleichtert die Handhabung weiter.

**Bezugszeichenliste**

| | | | |
|---|---|---|---|
| 1 | Rollator | 21 | Bewegungsrichtung |
| 2 | Rastanordnung | 22 | Ausnehmung |
| 3 | Außenrohr | 23 | Betätigungsrichtung |
| 4 | Kolben | 100 | Rollator |
| 5 | Rastbahn | 101 | Griffholm |
| 6 | Handhabe | 102 | Radholm |
| 7 | Kappe | 103 | Handgriff |
| 8 | hinterschnittene Nut | 104 | Hinterrad |
| 9 | Befestigungseinrichtung | 105 | Vorderrad |
| 10 | Auszugbegrenzer | 106 | Gelenkanordnung |
| 11 | Rastzylinder | 107 | Verbinder |
| 12 | Einsatz | 108 | Gelenkaufnahme |
| 13 | Langloch | 109 | Halter |
| 14 | Wippe | 110 | Kappe |
| 15 | Zweitrastmittel | 111 | Befestigungselement |
| 16 | Feder | 112 | Halter |
| 17 | Gewindebohrung | 113 | Auflager |
| 18 | Ansatz | 114 | Krücke |
| 19 | Kontaktbereich | 115 | Frontschutz |
| 20 | Angelpunkt | 116 | Kantenabweiser |

## Patentansprüche

1. Rastanordnung (2) für eine Mobilitätshilfe, insbesondere für einen höhenverstellbaren Holm einer Mobilitätshilfe, mit zwei relativ zueinander bewegbaren Teilen, wobei das erste Teil eine Rastbahn (5) und das zweite Teil ein Rastmittel (11) zur Ausbildung eines Kontakts mit der Rastbahn (5) aufweist, und wobei eine Handhabe (6) vorgesehen ist zur Arretierung des Rastmittels (11) im Kontakt mit der Rastbahn (5), wobei die Rastanordnung eine schwenkbar gelagerte Wippe umfasst, **dadurch gekennzeichnet, dass** das Rastmittel (11) von der schwenkbar gelagerten Wippe (14) angetrieben ist, wobei die Wippe (14) mittels der Handhabe (6) in einer das Rastmittel (11) im Kontakt mit der Rastbahn (5) arretierenden Konfiguration fixierbar ist, wobei an der Wippe (14) ein Zweitrastmittel (15) zur Ausbildung eines zusätzlichen Kontakts mit der Rastbahn (5) angeordnet ist, wobei das Zweitrastmittel in einer Verstellkonfiguration außer Kontakt mit der Rastbahn und in der arretierenden Konfiguration in Kontakt mit der Rastbahn steht.

2. Rastanordnung nach Anspruch 1, **dadurch gekennzeichnet, dass** die Wippe (14) um einen Angelpunkt (20) drehbar gelagert ist.

3. Rastanordnung nach Anspruch 2, **dadurch gekennzeichnet, dass** das Rastmittel (11) näher an dem Angelpunkt (20) angeordnet ist als ein Kontaktpunkt zwischen der Handhabe (6) und der Wippe (14).

4. Rastanordnung nach einem der vorangehenden Ansprüche, **gekennzeichnet durch** eine Verstellkonfiguration, wobei ein Kontakt zwischen dem Rastmittel (11) und der Rastbahn (5) in der Verstellkonfiguration durch eine Betätigung der beiden relativ zueinander bewegbaren Teile rücktreibbar ist, und wobei das Rastmittel (11) und die Rastbahn (5) in der arretierenden Konfiguration unbeweglich miteinander verbunden sind.

5. Rastanordnung nach einem der vorangehenden Ansprüche, **dadurch gekennzeichnet, dass** die Wippe (14) federgelagert ist.

6. Rastanordnung nach Anspruch 5, **dadurch gekennzeichnet, dass** die Wippe (14) derart unter Federspannung gelagert ist, dass das Rastmittel (11) in Richtung der Rastbahn (5) gedrängt wird.

7. Rastanordnung nach Anspruch 5 oder 6, **dadurch gekennzeichnet, dass** die Wippe (14) von einer der Rastbahn (5) abgewandten Seite gegen das Rastmittel (11) drückt.

8. Rastanordnung nach einem der vorangehenden Ansprüche, **dadurch gekennzeichnet, dass** der Kontakt zwischen dem Rastmittel (11) und der Rastbahn (5) reibschlüssig und/oder formschlüssig ausgebildet ist.

9. Rastanordnung nach einem der vorangehenden Ansprüche, **dadurch gekennzeichnet, dass** die Rastbahn (5) voneinander beabstandete Ausnehmungen (22) aufweist.

10. Rastanordnung nach einem der vorangehenden Ansprüche, **dadurch gekennzeichnet, dass** das Rastmittel (11) als ein in einem Langloch (13) beweglich geführter Rastzylinder ausgebildet ist.

11. Längenverstellbarer Holm für eine Mobilitätshilfe mit einer Rastanordnung (2) nach einem der vorangehenden Ansprüche, wobei der Holm ein Außenrohr (3) und einen längsbeweglich darin geführten Kolben (4) aufweist, wobei die Rastbahn (5) am Kolben (4) und das Rastmittel (11) am Außenrohr (3) angeordnet ist.

12. Längenverstellbarer Holm nach Anspruch 11, **dadurch gekennzeichnet, dass** das Außenrohr (3) eine lösbar daran angeordnete Befestigungseinrichtung (9) umfasst, an welcher Befestigungseinrichtung (9) das Rastmittel (11) angeordnet ist.

13. Längenverstellbarer Holm nach Anspruch 11 oder 12, **dadurch gekennzeichnet, dass** an einem in das Außenrohr (3) einzuführenden Bereich des Kolbens (4) ein bedarfsweise in unterschiedlichen Positionen befestigbarer Auszugbegrenzer (10) angeordnet ist.

14. Rollator (1) mit zwei längenverstellbaren Holmen nach einem der Ansprüche 11 bis 13, wobei die längenverstellbaren Holme als einen Handgriff tragende Griffholme dienen und jeweils auf einem Radholm angeordnet sind, wobei an den Radholmen Räder angeordnet sind.

## Claims

1. A detent assembly (2) for a mobility aid, in particular for a holm of a mobility aid, which holm is adjustable in height, comprising two parts that can be moved with respect to each other, wherein the first part comprises a detent rail (5) and the second part comprises a detent means (11) for establishing a contact with the detent rail (5), and wherein an operating element (6) is provided for locking the detent means (11) in contact with the detent rail (5), wherein the detent assembly includes a rocker mounted in a pivoting manner, **characterized in that** the detent means (11) is driven by the rocker (14) mounted in a pivoting manner, wherein the rocker (14) can be fixed by means of the operating element (6) in a configuration which locks the detent means (11) in contact with the detent rail (5), wherein a second detent means (15) for establishing an additional contact with the detent rail (5) is arranged on the rocker (14), wherein the second detent means is out of contact with the detent rail in an adjustment configuration and is in contact with the detent rail in the locking configuration.

2. A detent assembly according to claim 1, **characterized in that** the rocker (14) is mounted such that it can rotate around a pivot (20).

3. A detent assembly according to claim 2, **characterized in that** the detent means (11) is arranged closer to the pivot (20) than a contact point between the operating element (6) and the rocker (14).

4. A detent assembly according to one of the preceding claims, **characterized by** an adjustment configuration, wherein in the adjustment configuration a contact between the detent means (11) and the detent rail (5) can be revoked by actuating the two parts that can be moved with respect to each other, and wherein the detent means (11) and the detent rail (5) are connected to each other in an immobile manner in the locking configuration.

5. A detent assembly according to one of the preceding claims, **characterized in that** the rocker (14) is spring loaded.

6. A detent assembly according to claim 5, **characterized in that** the rocker (14) is mounted under spring tension such that the detent means (11) is pushed into the direction of the detent rail (5).

7. A detent assembly according to claim 5 or 6, **characterized in that** the rocker (14) presses against the detent means (11) from a side facing away from the detent rail (5).

8. A detent assembly according to one of the preceding claims, **characterized in that** the contact between the detent means (11) and the detent rail (5) is a friction-type and/or positive-locking contact.

9. A detent assembly according to one of the preceding claims, **characterized in that** the detent rail (5) comprises recesses (22) spaced apart from each other.

10. A detent assembly according to one of the preceding claims, **characterized in that** the detent means (11) is configured as a detent cylinder, which is movably guided in an elongated hole (13).

11. A holm adjustable in length for a mobility aid comprising a detent assembly (2) according to one of the preceding claims, wherein the holm comprises an outer tube (3) and a piston (4) which is guided in a longitudinally moveable manner inside this one, wherein the detent rail (5) is arranged on the piston (4) and the detent means (11) is arranged on the outer tube (3).

12. A holm adjustable in length according to claim 11, **characterized in that** the outer tube (3) comprises a fastening device (9) detachably arranged thereon, onto which fastening device (9) the detent means (11) is mounted.

13. A holm adjustable in length according to claim 11 or 12, **characterized in that** a pull out limiting device (10), that can be fixed in different positions according to the needs, is arranged on a portion of the piston (4) which is to be inserted into the outer tube (3).

14. A walker (1) comprising two holms adjustable in length according to one of the claims 11 through 13, wherein the holms adjustable in length serve as handle bars carrying handles and are respectively arranged on a wheel holm, wherein wheels are arranged on the wheel holms.

## Revendications

1. Dispositif d'arrêt (2) pour un équipement de mobilité, notamment pour une baguette réglable en hauteur d'un équipement de mobilité, comprenant deux parties déplaçables l'une par rapport à l'autre, la première partie comprenant un rail d'arrêt (5) et la deuxième partie comprenant un moyen d'arrêt (11) pour établir un contact avec le rail d'arrêt (5), et un élément de manipulation (6) étant prévu pour verrouiller le moyen d'arrêt (11) en contact avec le rail d'arrêt (5), le dispositif d'arrêt comprenant une bascule (14) logée de manière pivotante, **caractérisé en ce que** le moyen d'arrêt (11) est entraîné par la bascule (14) logée de manière pivotante, dans lequel la bascule (14) peut être fixée par moyen de l'élément de manipulation (6) dans une configuration, qui verrouille le moyen d'arrêt (11) en contact avec le rail d'arrêt (5), un deuxième moyen d'arrêt (15) pour établir un contact additionnel avec le rail d'arrêt (5) étant disposé sur la bascule (14), le deuxième moyen d'arrêt n'étant pas en contact avec le rail d'arrêt dans une configuration de réglage et étant en contact avec le rail d'arrêt dans la configuration de verrouillage.

2. Dispositif d'arrêt selon la revendication 1, **caractérisé en ce que** la bascule (14) est logée de manière tournant autour d'un pivot (20).

3. Dispositif d'arrêt selon la revendication 2, **caractérisé en ce que** le moyen d'arrêt (11) est disposé plus proche au pivot (20) qu'un point de contact entre l'élément de manipulation (6) et la bascule (14).

4. Dispositif d'arrêt selon l'une des revendications précédentes, **caractérisé par** une configuration de réglage, un contact entre le moyen d'arrêt (11) et le rail d'arrêt (5) pouvant être révoqué dans la configuration de réglage en actionnant les deux parties déplaçables l'une par rapport à l'autre et le moyen d'arrêt (11) et le rail d'arrêt (5) étant reliés l'un à l'autre de manière immobile dans la configuration de verrouillage.

5. Dispositif d'arrêt selon l'une des revendications précédentes, **caractérisé en ce que** la bascule (14) est montée sur ressorts.

6. Dispositif d'arrêt selon la revendication 5, **caractérisé en ce que** la bascule (14) est logée sous tension de ressort, de sorte que ie moyen-d'arrêt (11) est poussé dans la direction du rail d'arrêt (5).

7. Dispositif d'arrêt selon la revendication 5 ou la revendication 6, **caractérisé en ce que** la bascule (14) presse contre le moyen d'arrêt (11) à partir d'un côté opposé au rail d'arrêt (5).

8. Dispositif d'arrêt selon l'une des revendications précédentes, **caractérisé en ce que** le contact entre le moyen d'arrêt (11) et le rail d'arrêt (5) est un contact par friction et/ou à engagement positif.

9. Dispositif d'arrêt selon l'une des revendications précédentes, **caractérisé en ce que** le rail d'arrêt (5) comprend des évidements (22) espacés l'un de l'autre.

10. Dispositif d'arrêt selon l'une des revendications précédentes, **caractérisé en ce que** le moyen d'arrêt (11) est configuré comme un cylindre d'arrêt, qui est guidé de manière mobile dans un trou oblong (13).

11. Baguette réglable en longueur d'un équipement de mobilité, comprenant un dispositif d'arrêt (2) selon l'une des revendications précédentes, la baguette comprenant un tube extérieur (3) et un piston (4) guidé de manière mobile longitudinalement dans celui-ci, dans lequel le rail d'arrêt (5) est disposé sur le piston (4) et le moyen d'arrêt (11) est disposé sur le tube extérieur (3).

12. Baguette réglable en longueur selon la revendication 11, **caractérisée en ce que** le tube extérieur (3) comprend un dispositif de fixation (9) disposé de manière amovible sur celui-ci, sur lequel dispositif de fixation (9) est disposé le moyen d'arrêt (11).

13. Baguette réglable en longueur selon la revendication 11 ou la revendication 12, **caractérisée en ce qu'**un dispositif de limitation de sortie (10), qui peut être fixé dans des positions différentes selon le cas de besoin, est disposé sur une partie du piston (4), qui est à insérer dans le tube extérieur (3).

14. Déambulateur comprenant deux baguettes réglables en longueurs selon l'une des revendications 11 à 13, les baguettes réglables en longueur servant de manches, qui portent des poignées et qui sont chacune disposée sur une baguette à roues, dans lequel des roués sont disposées sur les baguettes à roues.
